# EUROPÄISCHE PATENTSCHRIFT

(11) **EP 1 634 309 B1**
(45) Veröffentlichungstag und Bekanntmachung des Hinweises auf die Patenterteilung: **24.11.2010**
(21) Anmeldenummer: 04739189.1
(22) Anmeldetag: 13.05.2004
(51) Int. Cl.: H01F 7/16, H01F 7/08, H01F 7/122, F16K 31/08

(54) **ELEKTROMAGNETISCHE ANTRIEBSVORRICHTUNG**
ELECTROMAGNETIC DRIVE DEVICE
DISPOSITIF D'ENTRAINEMENT ELECTROMAGNETIQUE

(30) Priorität: 14.06.2003 DE 10326911
(43) Veröffentlichungstag der Anmeldung: 15.03.2006
(73) Patentinhaber: FESTO AG & Co. KG, 73734 Esslingen (DE)
(72) Erfinder: GERHARTZ, Jürgen, D-73207 Plochingen (DE); SCHWENZER, Reinhard, 73728 Esslingen (DE)
(74) Vertreter: Vetter, Hans
(86) Internationale Anmeldenummer: PCT/EP2004/005119
(87) Internationale Veröffentlichungsnummer: WO 2004/112063

(56) Entgegenhaltungen:
- WO-A-02/08579
- DE-A- 4 400 822
- DE-A- 19 900 762
- US-A- 4 346 318

## Beschreibung

Die Erfindung betrifft eine elektromagnetische Antriebsvorrichtung, mit einem in Hubrichtung hin und her bewegbaren, einen kreisförmigen oder ovalen Querschnitt besitzenden Antriebsteil, das eine quer zur Hubrichtung magnetisierte Permanentmagnetanordnung besitzt, die wenigstens ein Paar entgegengesetzt magnetisierte, in Hubrichtung hintereinander angeordnete Magnetpartien aufweist und im Zwischenraum einer Jochanordnung mit in Magnetisierungsrichtung auf entgegengesetzten Seiten des Antriebsteils vorgesehenen Polstücken angeordnet ist.

Eine derartige, aus der DE 19900762 C2 bekannte elektromagnetische Antriebsvorrichtung besitzt nur zwei auf entgegengesetzten Seiten des Antriebsteils angeordnete Polstücke, die jeweils von einer bestrombaren Spule ringförmig umgeben sind, sodass die Axialrichtung der Spulen mit der Magnetisierungsrichtung der Magnetpartien des Antriebsteils übereinstimmt. Im bevorzugten Ausführungsbeispiel ist das Antriebsteil plattenähnlich flach ausgebildet.

WO 02/08579 A1 offenbart eine weitere bekannte elektromagnetische Antriebsvorrichtung, bei der jeweils zwei innere und zwei äußere Polstücke durch in Hubrichtung verlaufende Jochbereiche verbunden sind, von denen der innere von einer Spule umgriffen wird. Jedem Paar gegenüberliegender Polstücke ist auf dem Antriebsteil ein Paar entgegengesetzt magnetisierter, in Hubrichtung hintereinander angeordneter Permanentmagnete zugeordnet. Aufgrund der konzentrischen Anordnung von inneren Polstücken und Spule innerhalb des Antriebsteils, das wiederum innerhalb der äußeren Polstücke angeordnet ist, haben Polstücke und Spule andere Durchmesser als das Antriebsteil.

DE 3018407 A1 offenbart eine elektromagnetische Antriebsvorrichtung mit besonders flacher Bauform, bei der jeweils zwei innere und zwei äußere Polstücke durch in Hubrichtung verlaufende Jochbereiche verbunden sind, von denen einer von einer Spule umgriffen wird. Jedem Paar gegenüberliegender Polstücke ist auf dem Antriebsteil eine Scheibe aus magnetisierbarem Material zugeordnet.

Bei vielen Anwendungen, insbesondere für Ventile, kommt es auf eine besonders flache Bauweise der Gesamtkonstruktion der elektromagnetischen Antriebsvorrichtung an. Mit der bekannten Anordnung ist eine flache Bauweise nicht realisierbar.

Eine Aufgabe der vorliegenden Erfindung besteht darin, eine elektromagnetische Antriebsvorrichtung der eingangs genannten Gattung zu schaffen, die eine besonders flache Bauweise ermöglicht.

Diese Aufgabe wird erfindungsgemäß dadurch gelöst, dass die Jochanordnung zwei Paare von den Zwischenraum begrenzenden Polstücken aufweist, die über zwei im Wesentlichen parallel zur Hubrichtung verlaufende Jochbereiche miteinander verbunden sind, wobei wenigstens einer der Jochbereiche von einer zur Huberzeugung bestrombaren Spule umgriffen wird, und dass jedem Paar von Polstücken ein Paar entgegengesetzt magnetisierte Magnetpartien der Permanentmagnetanordnung zugeordnet ist.

Die Vorteile der erfindungsgemäßen elektromagnetischen Antriebsvorrichtung bestehen insbesondere darin, dass sie bei sehr einfachem Aufbau extrem schmal und flach gebaut werden kann, wobei die Breite der Gesamtanordnung den Durchmesser des Antriebsteils kaum übersteigt und gleichzeitig im Wesentlichen der Breite der Polstücke entspricht. Diese Antriebsvorrichtung eignet sich daher vor allem für sehr schmale Plattenventile. Ein weiterer Vorteil besteht darin, dass die Antriebsvorrichtung durch den rotationssymmetrischen Aufbau nur wenig toleranzkritisch ist. Es treten keine hohen Verdreh- und Kippkräfte auf, die die Lebensdauer der Lagerungen beeinträchtigen können.

Durch die in den Unteransprüchen aufgeführten Maßnahmen sind vorteilhafte Weiterbildungen und Verbesserungen der im Anspruch 1 angegebenen Antriebsvorrichtung möglich.

Im nicht bestromten Zustand der wenigstens einen Spule ist jedes Paar von entgegengesetzt magnetisierten Magnetpartien im Bereich von zwei zu beiden Seiten des Antriebsteils angeordneten Polstücken positioniert, das heißt, die Anordnung ist selbstzentrierend.

Die Paare von Magnetpartien sind zweckmäßigerweise durch ein Zwischenstück in der Hubrichtung voneinander beabstandet angeordnet, wobei das Zwischenstück vorzugsweise aus nicht magnetisierbarem Material, beispielsweise Kunststoff, besteht. Hierdurch erhöht sich die Magnetwirkung.

In einer vorteilhaften konstruktiven Ausgestaltung besteht das Antriebsteil aus einem Rohr oder Rundstab aus nicht magnetisierbarem Material, z.B. Kunststoff, der die Magnetpartien trägt. Dabei besteht vorzugsweise jede Magnetpartie aus zwei entgegengesetzt magnetisierten Halbkreisscheiben oder Halbringen. Die Magnetpartien sind dabei zweckmäßigerweise in Vertiefungen oder Ausnehmungen des Rohrs oder Rundstabs angeordnet. Hierdurch lässt sich der konstruktive Aufbau besonders einfach und kostengünstig realisieren.

Das Antriebsteil kann mit einem Abtriebsteil verbunden werden, das vorzugsweise als Kolben eines Kolbenschieberventils oder als sonstiges Ventilglied ausgebildet ist.

Zur Verbindung mit dem Abtriebsteil ist das als mit der Permanentmagnetanordnung versehene Rohr ausgebildete Antriebsteil nach Art einer Spannzange ausgebildet, die so mit dem Abtriebsteil verbindbar ist.

Zur Verstärkung der Hubkraft können mehrere Jochanordnungen in Hubrichtung hintereinander angeordnet sein.

Ausführungsbeispiele der Erfindung sind in der Zeichnung dargestellt und in der nachfolgenden Beschreibung näher erläutert. Es zeigen:
- Fig. 1: eine perspektivische Gesamtansicht einer elektro- magnetischen Antriebsvorrichtung mit zwei Spulen als Ausführungsbeispiel der Erfindung und
- Fig. 2: eine perspektivische Darstellung eines als mit Mag- netpartien versehenes Kunststoffrohr ausgebildeten Antriebsteils.

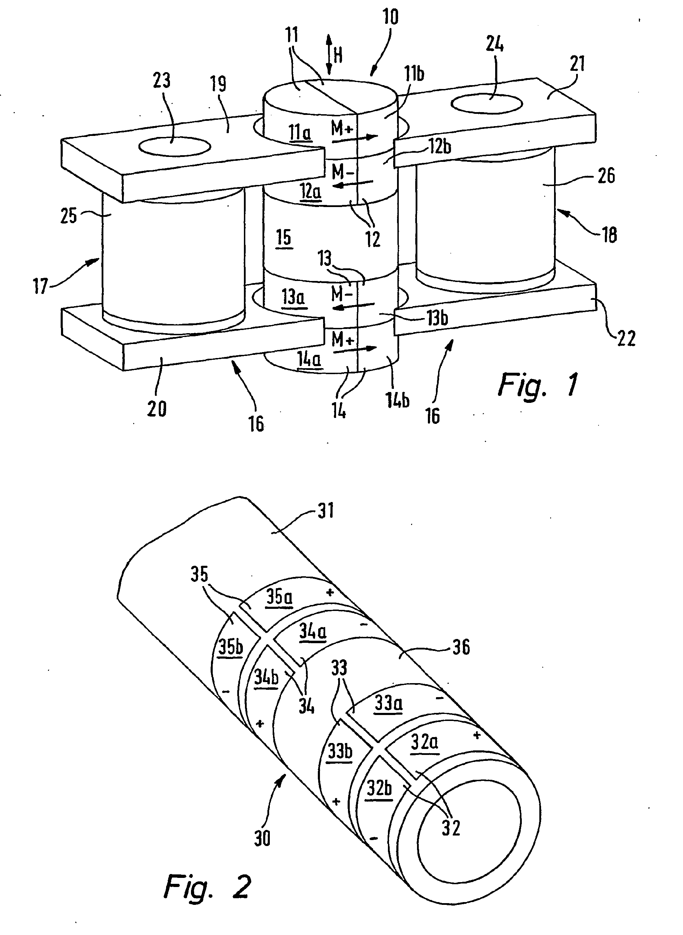

Bei dem in Fig. 1 dargestellten ersten Ausführungsbeispiel besteht ein kreiszylindrisches Antriebsteil 10 aus vier quer zur Hubrichtung H magnetisierten scheibenförmigen Magnetpartien 11-14, wobei die in Hubrichtung hintereinander angeordneten Magnetpartien 11, 12 einerseits und die ebenfalls in Hubrichtung hintereinander angeordneten Magnetpartien 13, 14 andererseits jeweils entgegengesetzt magnetisiert sind, was durch Magnetfeldpfeile M+ und M- gekennzeichnet ist. Die aneinanderliegenden Magnetpartien 11, 12 sind von den ebenfalls aneinanderliegenden Magnetpartien 13, 14 durch ein kreiszylindrisches Zwischenstück 15 getrennt, das aus nicht magnetisierbarem Material, beispielsweise Kunststoff, besteht. Es könnte jedoch auch aus magnetisierbarem Material bestehen oder bei entsprechender Dimensionierung der Magnetpartien 11-14 auch ganz entfallen.

Die Magnetpartien 11-14 bestehen jeweils aus zwei Halbscheiben 11a-14a sowie 11b-14b, um die gewünschten Magnetisierungsrichtungen leichter realisieren zu können. Prinzipiell kann es sich auch um diametral magnetisierte Vollscheiben oder Ringe oder Halbringe handeln. Anstelle von kreisförmigen Querschnitten sind auch ovale Querschnitte, wie z.B. elliptische Querschnitte möglich.

Eine Jochanordnung 16 besteht aus zwei im Wesentlichen U-förmigen Teiljochen 17, 18, die an entgegengesetzten Seiten des Antriebsteils 10 angeordnet sind. Dabei sind die die beiden Polstücke 19, 20 bildenden Schenkel des Teiljochs 17 und die beiden ebenfalls Polstücke 21, 22 bildenden Schenkel des Teiljochs 18 jeweils gegenüberliegend angeordnet, sodass das Antriebsteil 10 im kreisförmigen Zwischenraum zwischen den Polstücken 19 und 21 einerseits und den Polstücken 20 und 22 andererseits unter Bildung eines Spalts angeordnet ist. Bei dieser Anordnung entspricht die Breite der Polstücke 19-22 im Wesentlichen dem Durchmesser des Antriebsteils 10, sodass die Gesamtbreite der Antriebsvorrichtung im Wesentlichen dem Durchmesser des Antriebsteils 10 entspricht.

Der Abstand der Polstücke 19-21 einerseits und der Polstücke 21 und 22 andererseits in der Hubrichtung ist so dimensioniert, dass die Trennfläche zwischen den Magnetpartien 11, 12 in der Ebene der Polstücke 19, 21 und die Trennfläche zwischen den Magnetpolen 13 und 14 in der Ebene der Polstücke 20, 22 positioniert ist. Diese Positionierung lässt sich auch durch Variation der Höhe der Magnetpole 11-14 und der des Zwischenstücks 15 erreichen.

Die Polstücke 19, 20 sind über einen Jochbereich 23 und die Polstücke 21 und 22 über einen Jochbereich 24 jeweils miteinander verbunden. Diese Jochbereiche 23, 24 bilden Kerne für zwei Magnetspulen 25, 26, die die Jochbereiche 23, 24 ringartig umgreifen. Es ist prinzipiell auch möglich, nur an einem der Jochbereiche 23, 24 eine Magnetspule anzuordnen.

Bei der beschriebenen elektromagnetischen Antriebsvorrichtung ist das Antriebsteil 10 magnetisch zentriert, das heißt, es befindet sich bei nicht bestromten Magnetspulen 25, 26 in der dargestellten symmetrischen Position. Zur Auslenkung des Antriebsteils 10 werden die Magnetspulen 25, 26 gegensinnig bestromt. Je nach Stromstärke erfolgt eine mehr oder weniger starke Auslenkung des Antriebsteils in die Hubrichtung nach einer Seite und bei umgekehrter Bestromung zur anderen Seite hin. Der maximale Hub in der einen Richtung ist dann erreicht, wenn die Magnetpartien 11 und 13 mit den Polstücken fluchten, und in der anderen Richtung, wenn die Magnetpartien 12 und 14 mit den Polstücken fluchten. Bei Abschaltung des Stroms erfolgt eine automatische Rückkehr in die zentrierte Anfangslage.

Die beschriebene elektromagnetischen Antriebsvorrichtung kann beispielsweise zur Betätigung des Kolbens eines Kolbenschieberventils oder eines sonstigen Ventilglieds eingesetzt werden, wie dies im eingangs angegebenen Stand der Technik dargestellt und beschrieben ist. Andererseits kann diese elektromagnetische Antriebsvorrichtung auch als Betätigungsvorrichtung für alle Vorrichtungen eingesetzt werden, bei denen ein bestimmter Hub ausgeführt werden soll.

In Fig. 2 ist eine alternative Ausführung eines Antriebsteils 30 dargestellt. Dieses besteht im Wesentlichen aus einem Kunststoffrohr 31, das auch aus einem anderen, nicht magnetisierbaren Material bestehen und einen runden oder ovalen Querschnitt besitzen kann. Anstelle der Magnetpartien 11-14 treten hier die Magnetpartien 32-35, die jeweils aus zwei gegensinnig magnetisierten Halbringen 32a-35a, 32b-35b bestehen. Diese sind in entsprechende Ausnehmungen des Kunststoffrohrs 31 eingelassen und dort fixiert. In Abweichung der dargestellten Ausführungsform können sich die Magnetpartien 32, 33 einerseits und die Magnetpartien 34 und 35 andererseits gegenseitig berühren. Sie sind voneinander durch einen Abstandsbereich 36 des Kunststoffrohrs 31 getrennt, der dem Zwischenstück 15 des ersten Ausführungsbeispiel wirkungsmäßig entspricht. Auch die jeweils eine Magnetpartie bildenden Halbringe können abstandslos aneinanderliegen.

In Abwandlung des zweiten Ausführungsbeispiels können auch beispielsweise die Halbringe 32a und 32b einstückig ausgebildet sein, was für die entsprechenden anderen Halbringe dann ebenfalls zutrifft. Falls kein Abstandsbereich 36 vorgesehen ist, können auch alle Halbringe 32a-35a einstückig und alle Halbringe 32b-35b jeweils zusammen einstückig ausgebildet sein. Weiterhin ist eine Ausbildung als Halbscheiben oder diametral magnetisierte Vollscheiben möglich.

Das Kunststoffrohr 31 kann an seiner geschnitten dargestellten Seite mit einem Abtriebsteil verbunden sein, beispielsweise einem Ventilschieber. Hierzu kann das Kunststoffrohr 31 zumindest an dieser Verbindungsseite nach Art einer Spannzange ausgebildet sein, um auf einfache Weise das Abtriebsteil zu fixieren oder lösbar zu fixieren.

Zur Erhöhung der Hubkraft können mehrere Jochanordnungen 16 in Reihe hintereinander angeordnet sein. Dabei wird die Anordnung zwar länger, jedoch kann die geringe Breite beibehalten werden. Das Antriebsteil 10 muss dann selbstverständlich mit weiteren Paaren von Magnetpartien versehen werden.

## Patentansprüche

1. Elektromagnetische Antriebsvorrichtung, mit einem in Hubrichtung hin und her bewegbaren, einen kreisförmigen oder ovalen Querschnitt besitzenden Antriebsteil, das eine quer zur Hubrichtung magnetisierte Permanentmagnetanordnung besitzt, die wenigstens ein Paar entgegengesetzt magnetisierte, in Hubrichtung hintereinander angeordnete Magnetpartien aufweist und im Zwischenraum einer Jochanordnung mit in Magnetisierungsrichtung auf entgegengesetzten Seiten des Antriebsteils vorgesehenen Polstücken angeordnet ist, wobei die Jochanordnung (16) zwei Paare von den Zwischenraum begrenzenden Polstücken (19-22) aufweist, die über zwei im Wesentlichen parallel zur Hubrichtung (H) verlaufende Jochbereiche (23, 24) miteinander verbunden sind, wobei wenigstens einer dieser Jochbereiche (23, 24) von einer zur Huberzeugung bestrombaren Spule (25, 26) umgriffen wird, und dass jedem Paar von Polstücken (19, 21 bzw. 20, 22) ein Paar entgegengesetzt magnetisierte Magnetpartien (11, 12; 32, 33 bzw. 13, 14; 34,35) der Permanentmagnetanordnung zugeordnet ist, **dadurch gekennzeichnet, dass** die Breite der Polstücke (19-22) und der Durchmesser der wenigstens einen Spule (25, 26) im Wesentlichen dem Durchmesser des Antriebsteils (10; 30) entspricht.

2. Elektromagnetische Antriebsvorrichtung nach Anspruch 1, **dadurch gekennzeichnet, dass** im nicht bestromten Zustand der wenigstens einen Spule (25, 26) jedes Paar von entgegengesetzt magnetisierten Magnetpartien (11, 12; 32, 33 bzw. 13, 14; 34, 35) im Bereich von zwei zu beiden Seiten des Antriebsteils (10) angeordneten Polstücken (19, 21 bzw. 20, 22) positioniert ist.

3. Elektromagnetische Antriebsvorrichtung nach Anspruch 1 oder 2, **dadurch gekennzeichnet, dass** die Paare von Magnetpartien (11, 12; 32, 33 bzw. 13, 14; 34, 35) durch ein Zwischenstück (15; 36) in der Hubrichtung (H) voneinander beabstandet angeordnet sind.

4. Elektromagnetische Antriebsvorrichtung nach Anspruch 3, **dadurch gekennzeichnet, dass** das Zwischenstück (15; 36) aus nicht magnetisierbarem Material besteht.

5. Elektromagnetische Antriebsvorrichtung nach einem der vorhergehenden Ansprüche, **dadurch gekennzeichnet, dass** das Antriebsteil (30) aus einem Rohr (31) oder Rundstab aus nicht magnetisierbarem Material, insbesondere Kunststoff besteht, der die Magnetpartien (32-35) trägt.

6. Elektromagnetische Antriebsvorrichtung nach Anspruch 5, **dadurch gekennzeichnet, dass** jede Magnetpartie (32-35) aus zwei entgegengesetzt magnetisierten Halbkreisscheiben oder Halbringen (32a-35a, 32b-35b) besteht.

7. Elektromagnetische Antriebsvorrichtung nach Anspruch 6, **dadurch gekennzeichnet, dass** die Magnetpartien (32-35) in Vertiefungen oder Ausnehmungen des Rohrs (31) oder Rundstabs angeordnet sind.

8. Elektromagnetische Antriebsvorrichtung nach einem der vorhergehenden Ansprüche, **dadurch gekennzeichnet, dass** das Antriebsteil (10; 30) mit einem Abtriebsteil verbunden ist, das vorzugsweise als Kolben eines Kolbenschieberventils oder als sonstiges Ventilglied ausgebildet ist.

9. Elektromagnetische Antriebsvorrichtung nach Anspruch 8, **dadurch gekennzeichnet, dass** das als mit der Permanentmagnetanordnung (32-35) versehene Rohr (31) ausgebildete Antriebsteil (30) nach Art einer Spannzange mit dem Abtriebsteil verbunden ist.

10. Elektromagnetische Antriebsvorrichtung nach einem der vorhergehenden Ansprüche, **dadurch gekennzeichnet, dass** mehrere Jochanordnungen (16) in der Hubrichtung (H) hintereinander angeordnet sind.

## Claims

1. Electromagnetic drive unit with a drive member capable of movement to and fro in a direction of stroke and having a circular or oval cross-section and having a permanent magnet assembly magnetised at right-angles to the direction of stroke with a pair of oppositely-magnetised magnet sections arranged one behind the other in the direction of stroke and mounted in the interspace of a yoke arrangement with pole pieces provided on opposite sides of the drive member in the direction of magnetisation, wherein the yoke arrangement (16) has two pairs of pole pieces (19-22) bounding the interspace, which are connected to one another by yoke sections (23, 24) running substantially parallel to the direction of stroke (H), wherein at least one of these yoke sections (23, 24) is encompassed by a coil (25, 26) which may be energised to generate the stroke, and that each pair of pole pieces (19, 21 and 20, 22 respectively) is assigned a pair of oppositely magnetised magnet sections (11, 12; 32, 33 and 13, 14; 34, 35 respectively) of the permanent magnet assembly, **characterised in that** the width of the pole pieces (19-22) and the diameter of at least one coil (25, 26) corresponds substantially to the diameter of the drive member (10; 30).

2. Electromagnetic drive unit according to claim 1 **characterised in that**, in the non-energised state of the coil or coils (25, 26), each pair of oppositely magnetised magnet sections (11, 12; 32, 33 and 13, 14; 34, 35 respectively) is positioned in the area of two pole pieces (19, 21 and 20, 22 respectively) arranged on both sides of the drive member (10).

3. Electromagnetic drive unit according to claim 1 or 2, **characterised in that** the pairs of magnet sections (11, 12; 32, 33 and 13, 14; 34, 35 respectively) are separated from one another by a spacer element (15; 36) in the direction of stroke (H).

4. Electromagnetic drive unit according to claim 3, **characterised in that** the spacer element (15; 36) is made of non-magnetisable material.

5. Electromagnetic drive unit according to any of the preceding claims, **characterised in that** the drive member (30) is made of a tube (31) or round bar of non-magnetisable material, in particular plastic, which carries the magnet sections (32-35).

6. Electromagnetic drive unit according to claim 5, **characterised in that** each magnet sections (32-35) is made of two oppositely magnetised semicircular discs or half rings (32a-35a; 32b-35b).

7. Electromagnetic drive unit according to claim 6, **characterised in that** the magnet sections (32-35) are located in depressions or recesses of the tube (31) or round bar.

8. Electromagnetic drive unit according to any of the preceding claims, **characterised in that** the drive member (10; 30) is connected to an output member, which is preferably in the form of a piston of a piston slide valve or other valve member.

9. Electromagnetic drive unit according to claim 8, **characterised in that** the drive member (30) in the form of a tube (31) provided with the permanent magnet assembly (32-35) is connected to the output member in the manner of a collet.

10. Electromagnetic drive unit according to any of the preceding claims, **characterised in that** several yoke arrangements (16) are arranged behind one another in the direction of stroke (H).

## Revendications

1. Dispositif d'entraînement électromagnétique, avec une partie d'entraînement mobile en va et vient dans la direction de course et possédant une section circulaire ou ovale, partie qui possède un système d'aimant permanent magnétisé transversalement à la direction de course, qui présente au moins une paire de parties magnétiques placées l'une derrière l'autre dans la direction de course et magnétisées en sens inverse et est placée dans l'interstice d'un système de berceau (16) avec des éléments polaires prévus dans la direction de magnétisation sur des côtés opposés de la partie d'entraînement, dans lequel le système de berceau (16) présente deux paires d'éléments polaires (19 - 22) délimitant l'interstice, qui sont reliés entre eux par l'intermédiaire de deux zones de berceau (23, 24) s'étendant pour l'essentiel parallèlement à la direction de course (H), dans lequel au moins l'une de ces zones de berceau (23, 24) est saisie par une bobine (25, 26) pouvant être alimentée électriquement pour produire la course, et à chaque paire d'éléments polaires (19, 21 resp. 20, 22) est associée une paire de parties magnétiques (11, 12 ; 32, 33 resp. 13, 14 ; 34, 35) du système d'aimant permanent magnétisées en sens inverse, **caractérisé en ce que** la largeur des éléments polaires (19 - 22) et le diamètre de la bobine (25, 26) au nombre d'au moins un correspondent pour l'essentiel au diamètre de la partie d'entraînement (10 ; 30).

2. Dispositif d'entraînement électromagnétique selon la revendication 1, **caractérisé en ce qu'**à l'état non alimenté de la bobine (25, 26) au nombre d'au moins un, chaque paire de parties magnétiques (11, 12 ; 32, 33 resp. 13, 14 ; 34, 35) magnétisées en sens inverse est positionnée au niveau de deux éléments polaires (19, 21 resp. 20, 22) placées des deux côtés de la partie d'entraînement (10).

3. Dispositif d'entraînement électromagnétique selon la revendication 1 ou 2, **caractérisé en ce que** les paires de parties magnétiques (11, 12 ; 32, 33 resp. 13, 14 ; 34, 35) sont espacées les unes des autres dans la direction de course (H) par un élément intermédiaire (15 ; 36).

4. Dispositif d'entraînement électromagnétique selon la revendication 3, **caractérisé en ce que** l'élément intermédiaire (15 ; 36) est constitué d'un matériau non magnétisable.

5. Dispositif d'entraînement électromagnétique selon l'une des
revendications précédentes, **caractérisé en ce que** la partie d'entraînement (30) est composée d'un tube (31) ou d'une barre ronde dans un matériau non magnétisable, en particulier une matière plastique, qui porte les parties magnétiques (32-35).

6. Dispositif d'entraînement électromagnétique selon la revendication 5, **caractérisé en ce que** chaque partie magnétique (32-35) est constituée de deux plaques semi-circulaires ou demi-anneaux (32a-35a, 32b-35b) magnétisées en sens inverse.

7. Dispositif d'entraînement électromagnétique selon la revendication 6, **caractérisé en ce que** les parties magnétiques (32-35) sont placés dans des renfoncements ou évidements du tube (31) ou de la barre ronde.

8. Dispositif d'entraînement électromagnétique selon l'une des revendications précédentes, **caractérisé en ce que** la partie d'entraînement (10 ; 30) est reliée à une partie de sortie qui est conformée de préférence en piston d'une vanne à piston ou en un autre organe de vanne.

9. Dispositif d'entraînement électromagnétique selon la revendication 8, **caractérisé en ce que** la partie d'entraînement (30) conformée en tube (31) munie du système d'aimant permanent (32-35) est reliée à la partie de sortie à la manière d'une pince de serrage.

10. Dispositif d'entraînement électromagnétique selon l'une des revendications précédentes, **caractérisé en ce que** plusieurs systèmes de berceau (16) sont placés les uns derrière les autres dans la direction de course (H).
